# EUROPEAN PATENT SPECIFICATION

(11) **EP 2 488 989 B1**
(45) Date of publication and mention of the grant of the patent: **20.05.2015**
(21) Application number: 10737665.9
(22) Date of filing: 29.03.2010
(51) Int. Cl.: G06K 7/00, G06K 19/077

(54) **EDGE MOUNTED RFID TAG**
RFID TAG FÜR RANDMONTAGE
DISPOSITIF RFID À MONTER SUR UN BORD

(30) Priority: 15.10.2009 US 580154
(43) Date of publication of application: 22.08.2012
(73) Proprietor: VALLOUREC OIL AND GAS FRANCE, 59620 Aulnoye-Aymeries (FR)
(72) Inventor: BINMORE, Ian Rex, Houston Texas 77077 (US)
(74) Representative: Marsolais, Richard
(86) International application number: PCT/US2010/029061
(87) International publication number: WO 2011/046631

(56) References cited:
- DE-A1-102006 009 802
- DE-U1-202005 020 427
- DE-U1-202008 011 345
- JP-A- 2004 125 788
- US-A1- 2004 003 528
- US-A1- 2005 024 211
- US-B1- 7 432 816
- US-B2- 7 256 697

## Description

### BACKGROUND

### Field of Invention

Embodiments of the invention relate generally to Radio-frequency identification (RFID) tags, and more specifically, to RFID tags configured for installation into the edge of an object.

### Description of Related Art

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light and not as admissions of prior art.

RFID tags are often used to manage and track objects, such as system components, tools, machinery, equipment, etc., through production, inventory, storage, deployment and/or product use. In general, RFID tags include a microchip or integrated circuit used to transmit and/or store identification and possibly other information. An external transceiver/interrogator/reader located remotely with respect to the RFID tag is used to receive information from and/or transmit information to the RFID tag. The RFID tag typically includes an antenna that transmits RF signals relating to the identification and/or information stored within the RFID tag.

For certain applications, such as surface and downhole oil and gas applications, RFID tags may be utilized to track equipment and inventory. However, to be particularly useful, the RFID tags should be designed such that equipment can be tracked while in storage, transit, and field use, (i.e., surface, downhole and underwater), depending on the type of equipment and the utilization thereof. Designing RFID tags to be readable from multiple positions (e.g., while in a warehouse and while in use) offers a number of challenges. Further, for downhole or underwater applications, the durability of such RFID tags presents a number of additional challenges. Among the various considerations are structural integrity through a wide range of temperatures and pressures, as well as mechanical forces, readability of the RFID tag and ease of installation, for instance.

DE 20 2008 011 345 U discloses an RFID unit for marking parts of a building.

US 2005/0024211 A1 discloses an object control and tracking system and related methods using separate object identification and location detection mechanisms for objects, such as keys, that are maintained in a secure enclosure, such as a key drawer. A plurality of object slots are located on the top tray of the enclosure to receive object tags that include both an RFID tag and an object to be tracked. The objects (e.g., keys) are attached to a portion of the object tags that are outside of the enclosure. Presence detectors are used to determine if an object tag is present in the corresponding slot of the enclosure. RFID sensors located on opposite interior side walls of the enclosure interrogate each RFID tag to determine the presence of each RFID tag within the enclosure. The object control and tracking system includes a controller, a memory for storing an object control database, and related processing logic operating on the controller to control scanning of the presence detectors to determine an object tag's presence in a corresponding slot, to identify each object present in the enclosure and to compare the identified objects with an object control database to determine each object removed or replaced since the previous database update.

US 2004/0003528 A1 discloses a portable firearms having identification marks and methods of making the same. An example firearm includes a first identification number visibly located on the firearm; and a second, hidden or disguised identification number associated with the first identification number to facilitate identifying the firearm if the first identification number is destroyed, changed, or damaged.

According to an aspect of the invention there is provided an RFID tag assembly as set out in claim 1.

### BRIEF DESCRIPTION OF DRAWINGS

Certain embodiments are described in the following detailed description and in reference to the drawings in which:
FIG. 1A illustrates a schematic view of an RFID tag system including an edge mounted RFID tag, in accordance with embodiments of the invention;
FIG. 1B illustrates a schematic view of the edge mounted RFID tag of FIG. 1A, being inserted into the edge of an object, in accordance with embodiments of the invention;
FIGS. 2A and 2B illustrate schematic views of the side and top views, respectively, of the drilling detail of a tag pocket configured to receive the edge mounted RFID tag, in accordance with embodiments of the invention;
FIG. 2C illustrates a schematic view of an inner surface of the tag pocket of FIGS. 2A and 2B in accordance with an embodiment of the invention;
FIGS. 3A-3C illustrate schematic views of an edge mounted RFID tag in accordance with embodiments of the invention;
FIG. 4A illustrates a schematic view of a flange having an edge mounted RFID tag installed therein, in accordance with one embodiment of the invention; and
FIG. 4B illustrates a schematic view of a weldment having an edge mounted RFID tag installed therein, in accordance with another embodiment of the invention.

### DETAILED DESCRIPTION

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Generally, embodiments of the invention are directed to an RFID system including an RFID tag configured for installation into the edge of an object. In certain embodiments, the object may include a structure such as a flange, weldment, casting, or any material having an edge defined by the intersection of surfaces. Depending on the application and the materials used, the RFID tag may be particularly well suited for downhole and subsea drilling, mining or industrial equipment. As will be described in further detail below, the disclosed RFID tag is optimized for edge installation and may advantageously provide readability from multiple surfaces and angles, easy installation, and packaging and installation that is resistant to mechanical and chemical stresses, even in harsh conditions.

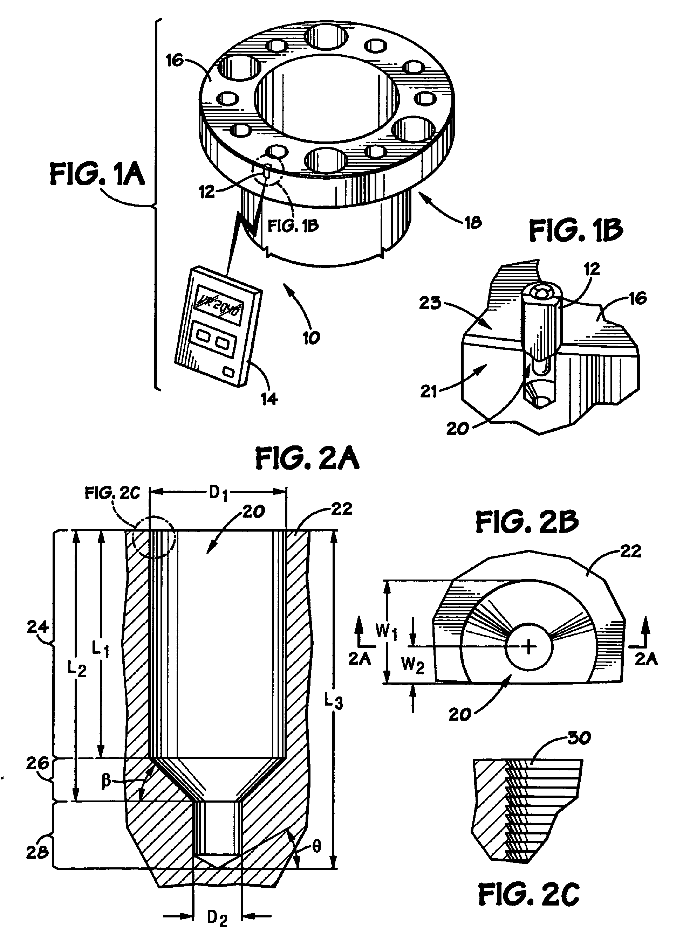

Turning now to the drawings, and referring initially to FIG. 1A, an RFID tag system 10 is illustrated. Specifically, the RFID tag system 10 includes an RFID tag 12 and a reader 14. The reader 14 is generally configured to interrogate the RFID tag 12. Accordingly, the reader 14 typically includes a transmitter and receiver for exchanging RFID information with the RFID tag 12. The reader 14 may also include a processor for receiving the RF data from the RFID tag 12 and extrapolating the RF data into meaningful data whereby identification or other stored information can be perceived by a user. In certain embodiments, the reader may be integrated with a computer system.

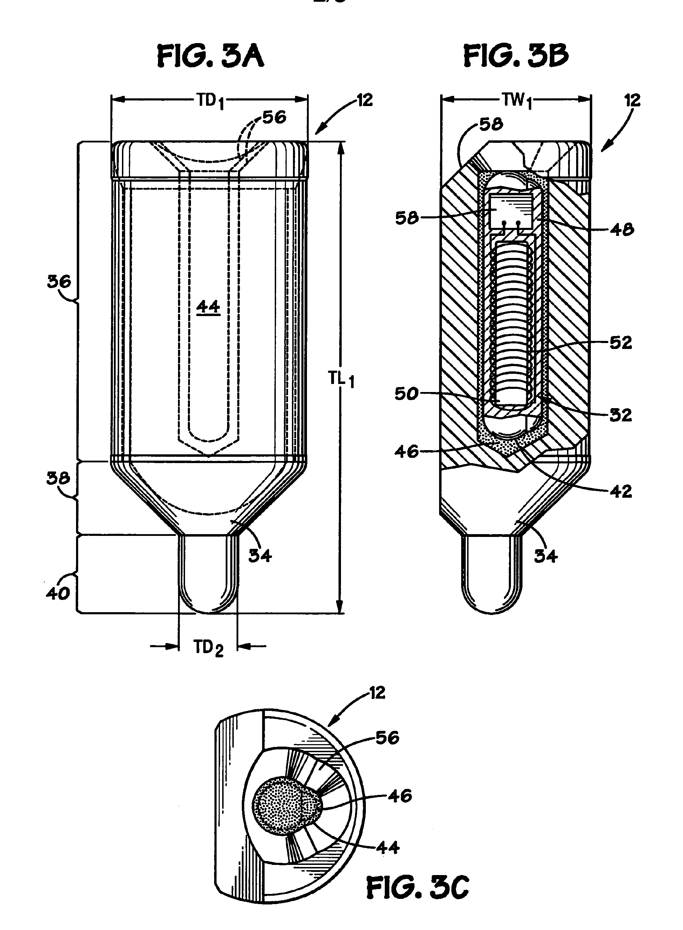

As will be discussed and illustrated further below with regard to FIGS. 3A-3C, the RFID tag 12 includes a carrier, having an electronics module therein. The electronics module includes the ability to store an identifier and an associated integrated circuit as applicable for storing and processing information and manipulating RF signals. The electronics module further includes an antenna for transmitting and receiving RF signals. The RFID tag 12 may be passive, active, or semi-active. Passive RFID tags rely on the reader to provide the power source for activation. While passive RFID tags 12 may be employed for certain applications, active or semi-active RFID tags 12 may be more suitable for applications where the reader 14 is located beyond the range of the RFID tags 12 ability to passively communicate with a reader. If the RFID tag 12 is active or semi-active, the RFID tag 12 may include a battery for transmission of RF signals.

In the embodiment illustrated in FIG. 1A, the RFID tag 12 is installed into the edge of a flange 16 which is part of a riser 18 that may be used in a downhole drilling operation. FIG. 1B illustrates the RFID tag 12, as it is being inserted into the tag pocket 20. The tag pocket 20 may be formed in the edge of the flange 16 by a drilling process. Advantageously, the tag pocket 20 may be formed by a single drill and may be formed in existing equipment or tools, to retrofit the equipment or tools with an identification and tracking mechanism (i.e., the RFID tag 12).

The tag pocket 20 is sized to receive the RFID tag 12. In certain embodiments, the tag pocket 20 may be sized such that the RFID tag 12 fits securely into the tag pocket 20 where the RFID tag 12 is secured merely by mechanical frictional forces. Alternatively, or in addition, the RFID tag 12 may be secured in the tag pocket 20 with an adhesive or epoxy (not shown), for instance. The RFID tag 12 and tag pocket 20 will be described in greater detail with regard to FIGS. 2A-2C and 3A-3C. While the installed RFID tag 12 illustrated in FIG. 1A is installed into the edge of a flange 16, the RFID tag 12 can be installed into the edge of other materials, tools or equipment, such as weldments, castings, or any object or material having an edge and sized to receive the RFID tag 12 within the object or material.

As can be seen, once installed into the flange 16, or other material or tool, the RFID tag 12 is configured such that it is exposed within the tag pocket 20 on two surfaces of the flange 16 (i.e., the edge surface 21 and the top surface 23, as shown in FIG. 1B). Advantageously, the present configuration, wherein the RFID tag 12 is exposed on two surfaces, can be read from a wide range of angles. Further, the RFID tag 12 installed into the flange 16 will be readable, regardless of whether the flange 16 is mated to another flange or tightly stacked in inventory either horizontally or vertically, because the RFID tag 12 will remain accessible to the reader 14 in any of these configurations. Thus, the tag pocket 20 into which the RFID tag 12 is installed, will have openings which allow for the propagation of radio signal advantageous to the use of the RFID tag 12, even if the tag pocket 20 is formed in steel or other radio opaque material.

The current edge mounted RFID tag 12 design also offers other, more physical advantages over other RFID tags. For instance, because the tag is entirely recessed into the surface of the material, the material provides protection of the RFID tag 12 from impacts, abrasion and other deleterious effects or events which could destroy a surface mounted tag. That is, the tag pocket 20 provides surrounding protection of the RFID tag 12, as the geometry of the RFID tag 12 is contained within the geometry of the flange 16. The design also incorporates a geometry that enables the tag to be used at high pressures (e.g., greater than 20,000 psi). As discussed further below, the edge mounted RFID tag 12 may also be designed to survive at temperatures greater than or equal to 180° C. The materials may also be chosen such that the RFID tag 12 may be utilized in temperatures as low as that of liquid nitrogen.

Referring now to FIGS. 2A-2C, aspects of the tag pocket 20 are described. Specifically, FIG. 2A illustrates a cross sectional view of the tag pocket 20, taken through the cut lines 2A-2A of FIG. 2B, and FIG. 2B illustrates a top view of the tag pocket 20. In one implementation, the tag pocket 20 is drilled into the edge of the material 22 with a rounded hole that breaks out of the face normal to the long axis of the drill. The material 22 is typically a hard material, such as steel, and may be any tool, equipment or object, for which RFID tracking is desired. In one embodiment, the material 22 may be the edge of a flange 16, as illustrated in FIG. 1A. The tag pocket 20 is positioned along the edge of the material 22 such that the optimal radio frequency performance is achieved in conjunction with the protection and retention of the tag.

As will be understood, the tag pocket 20 is sized and shaped such that the RFID tag 12 can be disposed therein, in a mated relationship. The tag pocket 20 may be formed in the material 22 using a step drill. As with the RFID tag described with reference to FIG. 3, the illustrated embodiment of the tag pocket 20 has a body portion 24, a tapered portion 26 and a pilot portion 28. The body portion 24 has a diameter D1, at its widest point, and a length L1. The pilot portion 28 has a diameter D2 that is smaller than the diameter D1 of the body portion 24. The tapered portion 26 is formed between the body portion 24 and the pilot portion 28. The tag pocket 20 has a total length L3.

As best illustrated in FIG. 2B, in accordance with one embodiment, the tag pocket 20 (as well as the RFID tag 12) has a cross-section that has a hypersemicircular shape. That is, the shape of the cross-section is circular, and extends beyond a semicircle. Thus, the hypersemicircular circumference extends beyond 180 degrees. The width W1 of the hypersemicircular tag pocket 20 is greater than a radius of the tag pocket 20. The hypersemicircular shape allows the RFID tag 12 to be installed into the material 22, and secured therein by the walls of the material 22 such that the RFID tag 12 will not slip out of the edge surface of the material 22, once installed. The opening in the edge surface is narrower than the widest diameter D1 of the tag pocket 20. The width W2 which extends from the center of the tag pocket 20, to the edge surface of the material 22 is less than a radius of the semicircular side of the tag pocket 20.

As will be appreciated, the shape, size and dimensions of the tag pocket 20 will depend on the particular shape, size and dimensions of the RFID tag 12 and may vary with the equipment being identified as well. In one embodiment, the tag pocket 20 may be formed with approximately the dimensions specified in Table 1. As will be appreciated, these dimensions may be varied depending on the size and shape of the RFID tag 12, as well as the drill or other apparatus available to form the tag pocket 20.

**Table 1**

| | |
|---|---|
| D1 | 0.2188" |
| D2 | 0.625" |
| L1 | 1.072" |
| L2 | 1.275" |
| L3 | 1.591" |
| W1 | 0.170" |
| W2 | 0.483" |
| θ | 31° |
| β | 45° |

FIG. 2C illustrates an alternate embodiment of the surface of the tag pocket 20. The inner surface of the tag pocket 20, may include ridges 30 or spikes to provide for a more secure mechanical coupling of the RFID tag 12 within the tag pocket 20. The ridges 30 or spikes may be arranged at the top of the body portion 24, or may extend throughout the entire length L1 of the body portion 24. The ridges 30 may be provided for a screw fitting and used in conjunction with or instead of an epoxy which may also be deposited within the tag pocket 20 to secure the RFID tag 12 therein. In embodiments, wherein the surface of the tag pocket 20 includes ridges 30, the RFID tag 12 may have similar ridges to mate with the surface within the tag pocket 20. In this case, the RFID tag 12 may be rotated or screwed into the tag pocket 20. In embodiments where the ridges 30 are not included, the RFID tag 12 may be inserted into the pre-formed tag pocket 20, after an epoxy has been dispensed within the tag pocket 20, to partially fill the tag pocket 20. The RFID tag 12 is then pressed into the epoxy to eliminate any voids in the tag pocket 20. Additional epoxy may then be disposed to fill any remaining voids. The surface of the RFID tag 12 may be similarly threaded to mate with ridges 30 in the tag pocket 20.

Referring now to FIGS. 3A-3C, various views of one embodiment of the RFID tag 12 are illustrated. The RFID tag 12 includes an electronics module 32, as illustrated in FIG. 3B, and a carrier 34, configured to house and contain the electronics module. As best illustrated in the top view of FIG. 3C and the side view of FIG. 3B, the carrier 34, and thus, the RFID tag 12, have a cross-section that forms a hypersemicircular shape, substantially similar to the shape of the tag pocket 20. As will be appreciated, the dimensions TD1, TD2, TL1 and TW1 are substantially similar to the dimensions D1, D2, L1 and W1, respectively. Further, the RFID tag 12 includes a body portion 36, configured to contain the electronics module 32, and a pilot portion 40, which is generally a solid material having no additional components therein. A tapered portion 38, which is tapered through its length, couples the wider body portion 36 to the narrower pilot portion 40, as illustrated.

In one embodiment, the carrier 34 may be formed using a high performance thermoplastic, such as PolyEtherEtherKetone (PEEK). Advantageously, PEEK thermoplastic is highly resistant to chemicals, has high strength, absorbs impacts well, has a high melting point and maintains a low brittleness at very low temperature. Pigment can be added to the plastic for UV resistance as desired. Alternatively, other radio transparent materials can be used instead of PEEK thermoplastic, depending on the environmental and operational characteristics of the application. For example, Acrylonitrile Butadiene Styrene (ABS) or other molded plastic could be used under some environmental and operational conditions.

In one embodiment, the carrier 34 contains a low frequency RFID electronics module 32 within an impermeable spherically ended cylinder or bead 42 made of high purity industrial grade glass. For some applications, an optimal frequency for the RFID electronics module 32 is 125 KHz -135 KHz, but in other applications a different frequency range may be preferred. In some applications, a high frequency RFID electronics module can be used.

In one embodiment, the bead 42 is inserted into a spherically ended round cavity 44 in the carrier 34 that minimizes stress on the glass part. The cavity 44 may have a merged bicircular shape, as best illustrated in FIG. 3C. In accordance with the present disclosure, a "merged bicircular shape" is defined as a shape that is made from two overlapping circles, wherein the overlapping portion is removed, and the shape is defined by only the outer, non-overlapping circumferences of the merged circles. The merged bicircular shape of the cavity 44 may provide pressure relief, as well as flow space for the epoxy 46, which is deposited in the cavity 44 and bonds the bead 42 to the plastic. The epoxy 46 has properties that are appropriate for the expansion coefficients of the material and the temperatures and chemicals to which the part may be exposed. In one embodiment, the epoxy 46 may comprise a two part material. In accordance with one assembly process, the cavity 44 may be partially filled with epoxy 46 and the bead 42 may be deposited therein. Once the bead 42 is in place, additional epoxy 46 may be disposed to fill the remainder of the cavity 44.

In general, the electronics module 32 is packaged within an impermeable material which is in turn packaged within the carrier material (e.g., PEEK), bound by an adhesive (e.g., epoxy 44), which is in turn mounted within the object or material (e.g., steel) mechanically or by adhesive either singularly or in combination, depending upon the application. In one embodiment, the electronics module 32 is packed within a silicone gel material 48, or other incompressible liquid, to absorb vibration and avoid crystallization at sustained high temperatures. Potting and filler materials may also be used to pack the electronics module 32. In one embodiment, the electronics module 32 includes packing materials which allow operation of the RFID tag 12 at sustained temperatures over 160°C, and in another embodiment, over 180°C. The electronics module 32 is designed such that it will continue to perform well in high magnetic fields and such that it will not be destroyed by rapid and strong magnetic fluctuations to which it may be exposed.

In one embodiment, the electronics module 32 contains a dipole including a ferrite core 50 and an antenna 52, which is wrapped around the ferrite core 50. The antenna 52 may be bonded to the integrated circuit 54, which includes the identification information stored thereon for reading the RFID tag 12. In one embodiment, the integrated circuit includes an erasable programmable read only memory (EPROM). RF Acoustic Wave devices may be deployed in a similar manner where higher temperatures are experienced during usage. The electronics module 32 includes wire bondings that are appropriate for the sustained high and low temperatures and carries an identifier in such a manner that the identity of the RFID tag 12 will not be lost during sustained high temperature exposure. The use of a dipole RFID tag 12 may provide desirable performance when installed within a radio opaque material, such as a steel material. The design enables longer read distances with any RF based system, especially low frequency RF systems,

In one embodiment, the geometry of the carrier 34 includes a beveled surface 56 where adhesive is applied to bond the electronics module 32 to the carrier 34. By providing a beveled opening or surface 56 at the top of the carrier 34, the stresses are reduced on the epoxy 46 at high pressures where the epoxy 46 can deflect (with the glass bead 42 inside) a greater amount than the PEEK carrier 34 does. Essentially to achieve the high pressure capabilities over a broad temperature range, the materials undergo a transition in mechanical and temperature related deviations from the impermeable and brittle glass bead 42 to the steel components (e.g., the material 22) which are being tagged. In the disclosed embodiments, the epoxy and the PEEK materials work together to allow for material deformations within tolerance of each other.

In addition, the disclosed carrier 34 includes an outer edge 58 that is shaped such that it follows the shape of the corner of the flange 16. In embodiments, wherein the RFID tag 12 is configured for use in an edge wherein the surfaces merge orthogonally, the carrier 34 may have edges that mimic the corner, such that the RFID tag 12 can be contained within the tag pocket 20, with no edges sticking out beyond the surfaces of the material in which the RFID tag 12 is disposed. Finally, where an edge tag is desired and the ruggedness of the particular manifestation of the design is not required, less complicated processes may be employed and simpler shapes of the RFID tag 12 and tag pocket 20 may be chosen.

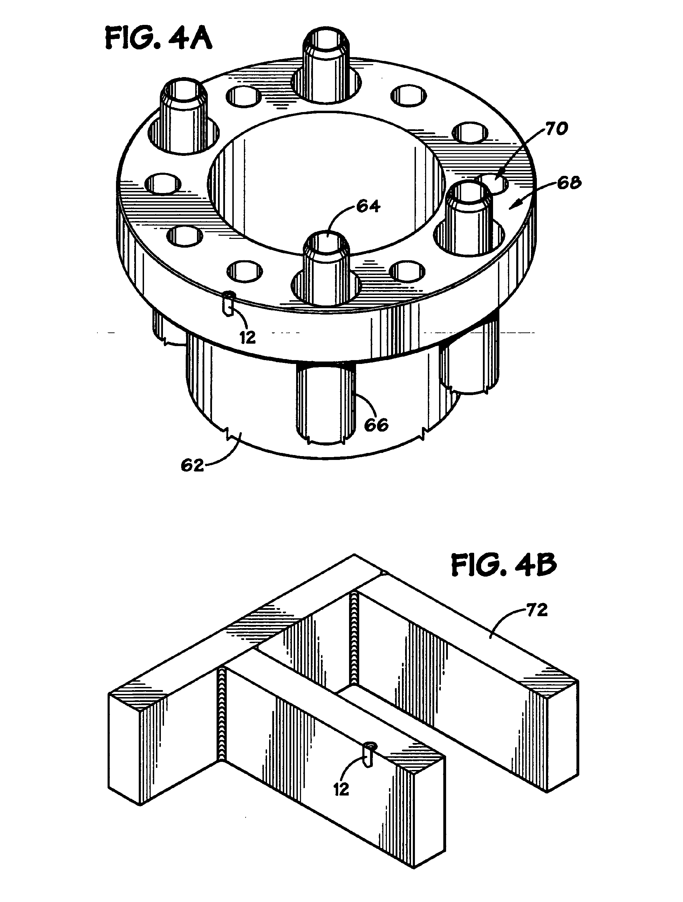

FIG. 4A illustrates a more detailed embodiment wherein the RFID tag 12 is installed in a riser flange 60, which is coupled to a mating riser flange 62. The flange 60 includes hollow conduits for running lines through the flange 60. The conduits may include a male components 64 and female components 66 configured to mateably couple the flange 60 to another flange. Thus, in the illustrated embodiment, a second flange may be mateably coupled to the sealing surface 68 of the illustrated flange 60. As will be appreciated, bolt holes 70 may be used to employ bolts (not shown) to secure one flange to another. The assembly may be used for any desirable application, such as down hole or subsea applications, and the RFID tag 12 may be used to track the flange 60. Further, as previously described, the RFID tag 12 may be employed in any tool, equipment or material, wherein an edge mounted RFID tag 12 may be useful. For example, FIG. 4B illustrates an embodiment of a weldment 72, wherein an RFID tag 12 has been installed therein.

## Claims

1. An RFID tag assembly (12), comprising:
- an object (16), wherein the object comprises a tag pocket (20) formed at the intersection of at least two surfaces of the object (16);
- an RFID tag (12), wherein the RFID tag comprises an electronics module (32) configured to transmit and receive RF signals;
- the RFID tag further comprises a carrier (34) configured to contain and protect the electronics module (32);
- the RFID tag (12) is configured to be mounted into the tag pocket (20);
**characterized in that**
- a cross-section of the tag pocket (20) comprises a first major segment of a circle, the first major segment comprising a first major arc;
- a cross-section of the RFID tag (12) comprises a second major segment of a circle, the second major segment comprising a second major arc;
- wherein the surface of the RFID tag (12) along the second major arc is configured to be enclosed by the surface of the object (16) along the first major arc.

2. The RFID tag assembly (12), as set forth in claim 1, wherein the RFID tag (12) is configured such that when the RFID tag is mounted into the tag pocket (20), at least two surfaces of the carrier (34) are exposed.

3. The RFID tag assembly (12), as set forth in claim 2, wherein at least one of the exposed surfaces of the carrier (34) is planar.

4. The RFID tag assembly (12), as set forth in any preceding claim, wherein the RFID tag (12) is readable through an angular range greater than 180° on two planes.

5. The RFID tag assembly (12), as set forth in any preceding claim, wherein the RFID tag (12) comprises a body portion (36) and a pilot portion (40), and wherein an area of a cross section of the body portion (36) is greater than an area of a cross section of the pilot portion (40).

6. The RFID tag assembly (12), as set forth in claim 5, wherein the RFID tag (12) comprises a tapered portion (38) coupled between the body portion (36) and the pilot portion (40), wherein a cross-sectional area of the tapered portion (38) decreases through its length extending from the body portion (36) to the pilot portion (40).

7. The RFID tag assembly (12), as set forth in any preceding claim, wherein the electronics module (32) comprises a dipole antenna.

8. The RFID tag assembly (12), as set forth in any preceding claim, wherein the electronics module (32) is configured to operate at a frequency in the range of approximately 125 KHz - 135 KHz.

9. The RFID tag assembly (12), as set forth in any preceding claim, wherein the electronics module (32) comprises an integrated circuit and an antenna, wherein the integrated circuit and the antenna are surrounded by glass.

10. The RFID tag assembly (12), as set forth in any preceding claim, wherein the RFID tag (12) is configured to operate at pressures greater than or equal to 20,000 psi.

11. The RFID tag assembly (12), as set forth in any preceding claim, wherein the RFID tag (12) is configured to operate at temperatures greater than or equal to 180° C.

12. The RFID tag assembly (12), as set forth in any preceding claim, comprising a planar surface configured to be exposed to an external environment when the RFID tag (12) is installed into the edge of the object (16), and comprising a curved surface configured to be enclosed by the material when the RFID tag (12) is installed into the edge of the object (16).

13. The RFID tag assembly (12), as set forth in any preceding claim, wherein the electronics module (32) is surrounded by a silicone gel material and formed within a glass bead, and wherein the glass bead is disposed within a cavity (44) of the carrier (34) and is surrounded by an epoxy.

14. The RFID tag assembly (12), as set forth in claim 13, wherein a cross-section of the cavity (44) is different from that of the RFID tag (12).

15. The RFID tag assembly (12), as set forth in claim 13, wherein a cross-section of the cavity (44) comprises a shape that is defined by the outer edges of two overlapping circles.

## Patentansprüche

1. RFID-Etikett-Anordnung (12) mit:
- einem Objekt (16), wobei das Objekt eine Etikettaussparung (20) aufweist, die an der Schnittfläche von mindestens zwei Flächen des Objekts (16) ausgebildet ist,
- einem RFID-Etikett (12), wobei das RFID-Etikett ein elektronisches Modul (32) aufweist, das ausgebildet ist, um Hochfrequenzsignale zu übertragen und zu empfangen,
- wobei das RFID-Etikett ferner einen Träger (34) aufweist, der ausgebildet ist, um das elektronische Modul (32) zu enthalten und zu schützen,
- wobei das RFID-Etikett (12) ausgebildet ist, um in der Etikettaussparung (20) montiert zu werden,
**dadurch gekennzeichnet, dass**
- ein Querschnitt der Etikettaussparung (20) ein erstes Hauptkreissegment aufweist, wobei das erste Hauptsegment einen ersten Hauptbogen aufweist,
- eine Querschnittsfläche des RFID-Etiketts (12) ein zweites Hauptkreissegment aufweist, wobei das zweite Hauptsegment einen zweiten Hauptbogen aufweist,
- wobei die Fläche des RFID-Etiketts (12) entlang dem zweiten Hauptbogen so ausgebildet ist, dass sie von der Fläche des Objekts (16) entlang dem ersten Hauptbogen umschlossen ist.

2. RFID-Etikett-Anordnung (12) nach Anspruch 1, wobei das RFID-Etikett (12) so ausgebildet ist, dass, wenn das RFID-Etikett in der Etikett-Aussparung (20) montiert ist, mindestens zwei Flächen des Trägers (34) freiliegen.

3. RFID-Etikett-Anordnung (12) nach Anspruch 2, wobei mindestens eine der freiliegenden Flächen des Trägers (34) eben ist.

4. RFID-Etikett-Anordnung (12) nach einem der vorstehenden Ansprüche, wobei das RFID-Etikett (12) in einem Winkelbereich von mehr als 180° auf zwei Ebenen lesbar ist.

5. RFID-Etikett-Anordnung (12) nach einem der vorstehenden Ansprüche, wobei das RFID-Etikett (12) einen Körperabschnitt (36) und einen Führungsabschnitt (40) aufweist, und wobei die Querschnittsfläche des Körperabschnitts (36) größer ist als die Querschnittsfläche des Führungsabschnitts (40).

6. RFID-Etikett-Anordnung (12) nach Anspruch 5, wobei das RFID-Etikett (12) einen abgeschrägten Abschnitt (38) aufweist, der zwischen dem Körperabschnitt (36) und dem Führungsabschnitt (40) angeordnet ist, wobei die Querschnittsfläche des abgeschrägten Abschnitts (38) über seine Länge ausgehend von dem Körperabschnitt (36) zu dem Führungsabschnitt (40) abnimmt.

7. RFID-Etikett-Anordnung (12) nach einem der vorstehenden Ansprüche, wobei das elektronische Modul (32) eine Dipolantenne aufweist.

8. RFID-Etikett-Anordnung (12) nach einem der vorstehenden Ansprüche, wobei das elektronische Modul (32) so ausgebildet ist, dass es in einem Frequenzbereich von etwa 125 kHz - 135 kHz arbeitet.

9. RFID-Etikett-Anordnung (12) nach einem der vorstehenden Ansprüche, wobei das elektronische Modul (32) eine integrierte Schaltung und eine Antenne aufweist, wobei der integrierte Schaltkreis und die Antenne von Glas umgeben sind.

10. RFID-Etikett-Anordnung (12) nach einem der vorstehenden Ansprüche, wobei das RFID-Etikett (12) so ausgebildet ist, dass es bei Drücken größer oder gleich 20.000 psi arbeitet.

11. RFID-Etikett-Anordnung (12) nach einem der vorstehenden Ansprüche, wobei das RFID-Etikett (12) so ausgebildet ist, dass es bei Temperaturen größer oder gleich 180 °C arbeitet.

12. RFID-Etikett-Anordnung (12) nach einem der vorstehenden Ansprüche mit einer ebenen Fläche, die so ausgebildet ist, dass sie einer äußeren Umgebung ausgesetzt ist, wenn das RFID-Etikett (12) in einer Kante des Objekts (16) installiert ist, und eine gekrümmte Fläche aufweist, die so ausgebildet ist, dass sie von dem Material umschlossen wird, wenn das RFID-Etikett (12) in der Kante des Objekts (16) installiert ist.

13. RFID-Etikett-Anordnung (12) nach einem der vorstehenden Ansprüche, wobei das elektronische Modul (32) von einem Silikongelmaterial umgeben ist und innerhalb einer Glasperle ausgeformt ist, und wobei die Glasperle innerhalb einer Ausnehmung (44) des Trägers (34) angeordnet und von einem Epoxyharz umgeben ist.

14. RFID-Etikett-Anordnung (12) nach Anspruch 13, wobei die Querschnittsfläche der Ausnehmung (44) von der Querschnittsfläche des RFID-Etiketts (12) verschieden ist.

15. RFID-Etikett-Anordnung (12) nach Anspruch 13, wobei der Querschnitt der Ausnehmung (44) eine Form hat, die von den Außenkanten zweier überlappender Kreise definiert wird.

## Revendications

1. Un assemblage (12) d'étiquette RFID comprenant:
- un objet (16), dans lequel l'objet comprend une poche d'étiquette (20) formée à l'intersection d'au moins deux surfaces de l'objet (16);
- une étiquette RFID (12), dans laquelle l'étiquette RFID comprend un module d'électronique (32) configuré pour transmettre et recevoir des signaux RF;
- l'étiquette RFID comprend également un support (34) configuré pour contenir et protéger le module électronique (32);
- l'étiquette RFID (12) est configurée pour être montée dans la poche d'étiquette (20);
**caractérisée en ce que**
- une section de la poche d'étiquette (20) comprend un premier segment principal d'un cercle, le premier segment principal comprenant un premier arc principal;
- une section de l'étiquette RFID (12) comprend un second segment principal d'un cercle, le second segment principal comprenant un second arc principal;
- dans laquelle la surface de l'étiquette RIFD (12) le long du deuxième arc principal est configurée pour être à l'intérieur de la surface de l'objet (16) le long du premier arc principal.

2. L'assemblage (12) d'étiquette RFID selon la revendication 1, dans lequel l'étiquette RFID (12) est configurée de manière à ce que quand l'étiquette RFID est montée dans la poche d'étiquette (20), au moins deux surfaces du support (34) sont exposées.

3. L'assemblage (12) d'étiquette RFID selon la revendication 2, dans lequel une au moins des surfaces exposées du support (34) est plane.

4. L'assemblage (12) d'étiquette RFID selon l'une des revendications précédentes, dans lequel l'étiquette RFID (12) est lisible sur une fourchette angulaire supérieure à 180° sur deux plans.

5. L'assemblage (12) d'étiquette RFID selon l'une des revendications précédentes, dans lequel l'étiquette RFID (12) comprend une portion de corps (36) et une portion pilote (40), et dans lequel une aire d'une section de la portion de corps (36) est plus grande qu'une aire de la section d'une portion pilote (40).

6. L'assemblage (12) d'étiquette RFID selon la revendication 5, dans lequel l'étiquette RFID (12) comprend une portion conique (38) couplée entre la portion de corps (36) et la portion pilote (40), dans lequel une aire sectionnelle de la portion conique (38) décroît sur sa longueur en s'étendant depuis la portion de corps (36) vers la portion pilote (40).

7. L'assemblage (12) d'étiquette RFID selon l'une des revendications précédentes, dans lequel le module électronique (32) comprend dune antenne en dipôle.

8. L'assemblage (12) d'étiquette RFID selon l'une des revendications précédentes, dans lequel le module électronique (32) est configuré pour fonctionner à une fréquence comprise entre 125 KHz et 135 KHz.

9. L'assemblage (12) d'étiquette RFID selon l'une des revendications précédentes, dans lequel le module électronique (32) comprend un circuit intégré et une antenne, dans lequel le circuit intégré et l'antenne sont entourés par du verre.

10. L'assemblage (12) d'étiquette RFID selon l'une des revendications précédentes, dans lequel l'étiquette RFID (12) est configurée pour fonctionner à des pressions supérieures ou égales à 20,000 psi.

11. L'assemblage (12) d'étiquette RFID selon l'une des revendications précédentes, dans lequel l'étiquette RFID (12) est configurée pour fonctionner à des températures supérieures ou égales à 180°C.

12. L'assemblage (12) d'étiquette RFID selon l'une des revendications précédentes, comprenant une surface plane configurée pour être exposée à un environnement extérieur quand l'étiquette RFID (12) est installée dans le bord de l'objet (16), et comprenant une surface courbe configurée pour être entourée par le matériau quand l'étiquette RFID (12) est installée dans le bord de l'objet (16).

13. L'assemblage (12) d'étiquette RFID selon l'une des revendications précédentes, dans lequel le module électronique (32) est entouré par un gel de silicone et formé dans une capsule de verre, dans lequel la capsule de verre est disposée dans une cavité (44) du support (34) et entourée par un époxy.

14. L'assemblage (12) d'étiquette RFID selon la revendication 13, dans lequel une section de la cavité (44) est différente de celle de l'étiquette RFID (12).

15. L'assemblage (12) d'étiquette RFID selon la revendication 13, dans lequel une section de la cavité (44) comprend une forme qui est définie par le bord extérieur de deux cercles en chevauchement.
